# EUROPÄISCHE PATENTSCHRIFT

(11) **EP 4 232 271 B1**
(45) Veröffentlichungstag und Bekanntmachung des Hinweises auf die Patenterteilung: **08.05.2024**
(21) Anmeldenummer: 22822449.9
(22) Anmeldetag: 25.11.2022
(51) Int. Cl.: B29C 70/88, B29C 70/54, H01M 50/24, H01M 50/162, B29D 99/00, B29C 70/46, B21D 37/12, B29L 31/00, B44B 5/00, B44B 5/02

(54) **ABDECKSTRUKTUR SOWIE VERFAHREN UND VORFORMWERKZEUG ZUM HERSTELLEN EINER ABDECKSTRUKTUR**
COVERING STRUCTURE AND METHOD AND PRE-FORMING TOOL FOR PRODUCING A COVERING STRUCTURE
STRUCTURE DE RECOUVREMENT AINSI QUE PROCÉDÉ ET OUTIL DE PRÉFORMAGE POUR PRODUIRE UNE STRUCTURE DE RECOUVREMENT

(30) Priorität: 29.11.2021 DE 102021131284
(43) Veröffentlichungstag der Anmeldung: 30.08.2023
(73) Patentinhaber: Georg Fritzmeier GmbH & Co. KG, 85653 Aying (DE)
(72) Erfinder: FRAUNHOFER, Stephan, 85653 Aying (DE)
(74) Vertreter: Winter, Brandl - Partnerschaft mbB
(86) Internationale Anmeldenummer: PCT/EP2022/083331
(87) Internationale Veröffentlichungsnummer: WO 2023/094617

(56) Entgegenhaltungen:
- WO-A1-2021/156094
- WO-A1-2021/156095
- CN-A- 109 301 124

## Beschreibung

Die Erfindung betrifft eine Abdeckstruktur / einen Deckel / Batteriedeckel, insbesondere für ein Batteriegehäuse / einen Batteriekasten, sowie ein Verfahren und ein Prägewerkzeug / Vorformwerkzeug zum Herstellen einer solchen Abdeckstruktur.

Seit einigen Jahren besteht ein Trend dahingehend, Verbrennungsmotoren durch Elektromotoren zu ersetzen. Ein Problem dabei ist die Bereitstellung von hinreichender Batteriekapazität. Insbesondere bei mit Elektromotoren ausgeführten Kraftfahrzeugen müssen zur Gewährleistung einer zufriedenstellenden Reichweite Batterien mit großer Kapazität eingebaut werden. Diese werden häufig am Unterboden des Fahrzeugs befestigt und müssen dementsprechend gegen äußere Einflüsse geschützt werden.

Der zur Karosserie/Fahrzeugkabine hinweisende Teil der Batterietragstruktur ist über geeignete mit der Batterietragstruktur verschraubte Abdeckstrukturen abgedeckt. Diese müssen so ausgebildet sein, dass sie beispielsweise bei einem Brand der Batterie für eine bestimmte Zeit, beispielsweise fünf Minuten der Wärmeentwicklung standhalten, so dass ein Übergreifen auf die Fahrzeugkabine und sonstige Fahrzeugkomponenten verzögert wird. Außerdem müssen die Abdeckstrukturen eine schädliche Wechselwirkung zwischen elektronischen oder elektrischen Komponenten innerhalb der Fahrzeugkabine und der Batterie selber, insbesondere der Steuerelektronik der Batterie, verhindern. D.h. die Abdeckstrukturen dienen auch der Verbesserung der elektromagnetischen Verträglichkeit (EMV-Schutz).

Eine solche für den Brandschutz und EMV-Schutz geeignete Abdeckstruktur ist aus DE 10 2020 107 675 A1 bekannt. Zum EMV-Schutz wird die Abdeckstruktur zeitnah nach dem Entformen des Grundkörpers mit einer Aluminiumkaschierung als zusätzlicher EMV-Schicht verklebt.

Darüber hinaus zeigt auch DE 10 2020 116 305 A1 eine solche Abdeckstruktur mit einer Brandschutzschicht und einer EMV-Schicht. Dabei werden sowohl die Brandschutzschicht als auch die EMV-Schicht mit dem SMC-Grundkörper verklebt. Ein weiteres Beispiel eines Batteriekastens und eines Fertigungsverfahrens eines Batteriekastens ist in CN 1 09 301 124 A offenbart.

Der Stand der Technik hat jedoch immer den Nachteil, dass an Befestigungsstellen, an welchen die Abdeckstruktur mit der Batterietragstruktur verschraubt wird, Feuchtigkeit durch die Bohrungen in der Abdeckstruktur in die Batterietragstrukur eintreten kann und folglich Korrosionsgefahr besteht.

Es ist also die Aufgabe der Erfindung, die Nachteile aus dem Stand der Technik zu vermeiden oder wenigstens zu mildern. Insbesondere soll eine einfach und kostengünstige Abdeckstruktur mit guter EMV bereitgestellt bzw. hergestellt werden, welche Korrosion an der Batterie unterbindet bzw. vermindert.

Diese Aufgabe wird im Hinblick auf die Abdeckstruktur durch die Merkmalskombination des Anspruchs 1, im Hinblick auf das Vorformwerkzeug durch die Merkmalskombinationen des Anspruchs 5 und im Hinblick auf das Verfahren durch die Merkmalskombinationen des weiteren Anspruchs 3 gelöst.

Vorteilhafte Weiterbildungen der Erfindung sind Gegenstand der Unteransprüche.

Die erfindungsgemäße Abdeckstruktur ist insbesondere zur Verwendung als eine Batterieabdeckung einer in einem Batteriegehäuse / Batteriekasten eingehausten Batterie eines elektrischen Fahrzeugs ausgelegt. Die Abdeckstruktur weist einen Sheet-Moulded-Copound-Grundkörper (SMC-Grundkörper) und eine mit dem SMC-Grundkörper verklebten Schicht zur Verbesserung der elektromagnetischen Verträglichkeit (EMV-Schicht) auf. Die EMV-Schicht wiederum weist eine kalottenförmige Oberfläche auf und besitzt eine Mehrzahl an über den Umfang der Abdeckstruktur verteilten Durchgangsöffnungen zur Aufnahme von Befestigungsmitteln, um die Abdeckstruktur an dem Batteriegehäuse zu befestigen. Erfindungsgemäß ist um wenigstens eine der Durchgangsöffnungen ein, vorzugsweise kreisrunder, Auflageabschnitt vorhanden, der mit einer im Wesentlichen glatten / geplätteten / platten Prägeoberfläche versehen ist. Dadurch kann im Bereich der wenigstens einen Durchgangsöffnung eine wasser- bzw. mediendichte Auflage für die Befestigungsmittel, insbesondere Schrauben, geschaffen werden.

Unter einer kalottenförmigen Oberfläche ist dabei eine dreidimensionale Struktur (Beulstruktur) mit einer Vielzahl gleichartiger, regulär angeordneter und im Querschnitt angenähert halbkreis- bzw. kreisabschnittsförmiger Strukturelemente zu verstehen.

Vorteilhafterweise kann die EMV-Schicht eine (pulverbeschichtete) Aluminiumfolie oder Aluminiumkaschierung sein oder diese umfassen. Dabei kann die Aluminiumfolie den SMC-Grundkörper teilweise oder weitgehend oder vollständig überdecken.

Insbesondere kann auf einer der kalottenförmigen Oberfläche abgewandten Oberfläche der EMV-Schicht eine Pulverbeschichtung in Form eines hitzeaktivierbaren Klebstoffpulvers aufgebracht sein.

Für eine Verbesserung der EMV kann es zweckdienlich sein, wenn die EMV-Schicht, insbesondere die Aluminiumfolie, eine Dicke von 0,1 bis 0,5 mm, bevorzugt von etwa 0,2 mm aufweist.

Zusätzlich kann die Abdeckstruktur auch eine Brandschutzschicht beinhalten, welche vorzugsweise mit dem SMC-Grundkörper verklebt sein kann. Insbesondere bei Automotive-Anwendungen kann es bevorzugt sein, wenn die EMV-Schicht auf der von der Brandschutzschicht abgewandten Seite des SMC-Grundkörpers aufgebracht ist. Besonders bevorzugt kann in der Einbaulage der Abdeckstruktur im Fahrzeug die Brandschutzschicht unten und die EMV-Schicht oben sein.

Bei einem erfindungsgemäßen Verfahren zum Herstellen einer EMV-Schicht für eine erfindungsgemäße Abdeckstruktur eines Batteriegehäuses mit einem Vorformwerkzeug wird die EMV-Schicht, insbesondere in Form einer pulverbeschichteten Aluminiumfolie, mit einer kalottierten Oberfläche formverändert und Bereiche um Durchgangsöffnungen der EMV-Schicht werden zur Ausbildung von Auflageabschnitten mit einer, vorzugsweise im Wesentlichen glatten, Prägeoberfläche prägend bearbeitet.

Dabei kann es vorteilhaft sein, wenn die EMV-Schicht in einem einzigen Bearbeitungsschritt, insbesondere in bzw. mit dem Vorformwerkzeug, formverändert wird und die Bereiche prägend unter Plättung der kalottierten Oberfläche bearbeitet werden.

Anders ausgedrückt betrifft die Erfindung ein Verfahren mit den Verfahrensschritten:
- Auflegen einer unverformten EMV-Schicht, insbesondere in Form einer Aluminiumfolie, mit einer kalottierten Oberfläche auf ein Unterwerkzeug eines Vorformwerkzeugs;
- Formverändern der EMV-Schicht durch Zufahren eines Oberwerkzeugs auf das Unterwerkzeug; und
- Planprägen von Auflageabschnitten für Befestigungsmittel zum Befestigen der Abdeckstruktur, vorzugsweise an dem Batteriegehäuse, mit im Wesentlichen glatter Prägeoberfläche um jede Durchgangsöffnung herum.

Bevorzugt können hierbei die Verfahrensschritte des Formveränderns und des Planprägens simultan / zeitgleich, d.h. in einem einzigen Bearbeitungsschritt, durchgeführt werden.

Ferner betrifft die Erfindung ein für das Ausformen einer EMV-Schicht für eine vorstehend beschriebene, erfindungsgemäße Abdeckstruktur geeignetes Vorformwerkzeug/Prägewerkzeug/Umformwerkzeug, welches insbesondere zum Durchführen des vorstehend beschriebenen, erfindungsgemäßen Verfahren eingerichtet ist.

Dabei weist ein solches, insbesondere für die Herstellung einer vorbeschriebenen Abdeckstruktur, vorzugsweise mit einem SMC-Grundkörper und einer mit dem SMC-Grundkörper verklebten EMV-Schicht, geeignetes Vorformwerkzeug ein Unterwerkzeug und ein relativ zu dem Unterwerkzeug in einer Höhenrichtung zwischen einer Umformposition und einer Auflegposition verlagerbares Oberwerkzeug auf. In der Umformposition ist zwischen dem Unterwerkzeug und dem Oberwerkzeug ein Formspalt zur Aufnahme der EMV-Schicht ausgebildet. Ferner weist das Oberwerkzeug zumindest eine Druckstückaufnahme zur Aufnahme eines gehärteten Druckstücks und das Unterwerkzeug wenigstens eine Gegenstückaufnahme zur Aufnahme eines gehärteten Gegenstücks auf.

Gemäß einer vorteilhaften Weiterbildung kann das zumindest eine Druckstück in der Umformposition die EMV-Schicht gegen das zumindest eine Gegenstück drücken und an einer Prägestelle zwischen dem zumindest einen Druckstück und dem zumindest einen Gegenstück lokal stärker verprägen, insbesondere plätten oder glätten.

In einer vorteilhaften Ausgestaltung kann das zumindest eine Druckstück mit dem Oberwerkzeug und das zumindest eine Gegenstück mit dem Unterwerkzeug verschraubt sein. D.h. das zumindest eine Druckstück bzw. das zumindest eine Gegenstück weisen jeweils eine Durchgangsöffnung auf, durch welche eine Schraube als Befestigungsmittel geführt und mit dem Oberwerkzeug bzw. dem Unterwerkzeug verschraubt werden kann.

Um mögliche Höhen- bzw. Dicken-/Wandstärkenunterschiede der kallotierten Oberfläche der EMV-Schicht ausgleichen zu können, kann es zweckmäßig sein, wenn das zumindest eine Druckstück um eine einstellbare Verprägetiefe über eine dem Unterwerkzeug zugewandte Oberfläche des Oberwerkzeugs und/oder das zumindest eine Gegenstück um die einstellbare Verprägetiefe über eine dem Oberwerkzeug zugewandte Oberfläche des Unterwerkzeugs vorragen. Bevorzugt kann die Verprägetiefe dabei durch zwischen dem zumindest einen Druckstück und dem Oberwerkzeug, insbesondere der zumindest einen Druckstückaufnahme, und/oder zwischen dem zumindest einen Gegenstück und dem Unterwerkzeug, insbesondere der zumindest einen Gegenstückaufnahme, einlegbare Unterlegbleche einstellbar sein. Dabei können die Verprägetiefe, welche mittels der Unterlegbleche zwischen dem zumindest einen Druckstück und dem Oberwerkzeug einstellbar ist, und die Verprägetiefe, welche mittels der Unterlegbleche zwischen dem zumindest einen Gegenstück und dem Unterwerkzeug einstellbar ist, unterscheiden oder gleich sein.

Vorzugsweise können das zumindest eine Druckstück und das zumindest eine Gegenstück in der Höhenrichtung jeweils einen konstanten Querschnitt aufweisen. Wenn dabei eine Querschnittsfläche des zumindest einen Druckstücks in der Höhenrichtung kleiner ist als eine Querschnittsfläche des zumindest einen Gegenstücks in der Höhenrichtung, kann das zumindest eine Gegenstück die Prägekraft bzw. den Prägedruck besser aufnehmen.

Gemäß einer besonders bevorzugten Ausgestaltung ist es dabei denkbar, dass das zumindest eine Druckstück und das zumindest eine Gegenstück als kreisrunde Scheiben ausgeführt sind. Auch kann es dabei zweckmäßig sein, wenn ein Außendurchmesser des zumindest einen Druckstücks kleiner ist als ein Außendurchmesser des zumindest einen Gegenstücks.

Mit anderen Worten betrifft die Erfindung ein Prägewerkzeug/Vorformwerkzeug, bei welchem über einstellbare Druckstücke/Gegenstücke eine lokale Verprägungslösung geschaffen wird, die an definierten Stellen eine glatte Halbzeugoberfläche ermöglicht. Im konkreten Fall wird eine Aluminiumfolie mit Kalottenstruktur und Pulverbeschichtung umgeformt und lokal stärker verprägt werden, um eine wasser- bzw. mediendichte Schraubenkopfauflagefläche zu schaffen. Die Verprägelösung soll im Zuge des Folien Umformprozesses eingesetzt werden. Innerhalb des Umformvorgangs sollen mittels der Verprägungslösung einzelne Bereiche definiert stärker als das restliche Halbzeug verprägt werden. Dabei wird im Prägewerkzeug an definierten Verprägestellen ein Druckstück und ein Gegenlager deckungsgleich in Ober- und Unterwerkzeug eingebracht, um die im Formspalt befindliche Aluminiumfolie lokal definiert zu verprägen. Druck- und Gegenstück können dabei gehärtet ausgeführt sein. Das Gegenstück ist mit einem größeren Durchmesser ausgeführt um den Prägedruck besser aufnehmen zu können. Der Verprägeeingriff kann am Druckstück über Unterlegbleche angepasst werden. Druck und Gegenstück sind mittels Verschraubung an den jeweiligen Werkzeughälften montiert.

Letztlich betrifft die Erfindung auch ein System aus einem Vorformwerkzeug, umfassend eine (vorzugsweise konturierte) Werkstückauflage, insbesondere Unterwerkzeug, und ein daraufzufahrbares Oberwerkzeug, zwischen denen eine Kalottenoberfläche aufweisende Aluminiumfolie eingelegt ist, wobei das Vorformwerkzeug eingerichtet ist, um unter Ausnutzung der erhöhten Dehnbarkeit durch die Kalottenoberfläche eine Formveränderung der Aluminiumfolie unter gleichzeitigem Beseitigen der Kalottenoberfläche im Bereich von Durchgangsöffnungen zu bewirken.

Die Erfindung wird nachfolgend mit Hilfe von Figuren erläutert. Es zeigen:
Fig. 1 eine Explosionsdarstellung eines Aufbaus einer Abdeckstruktur gemäß einer bevorzugten Ausführungsform
Fig. 2 eine Explosionsdarstellung eines Vorformwerkzeugs zur Herstellung einer EMV-Schicht für die Abdeckstruktur gemäß der bevorzugten Ausführungsform;
Fig. 3 eine perspektivische Detailschnittansicht durch eine lokale Prägestelle des Vorformwerkzeugs gemäß der bevorzugten Ausführungsform;
Fig. 4 eine Schnittansicht durch die lokale Prägestelle des Vorformwerkzeugs gemäß der bevorzugten Ausführungsform;
Fig. 5 eine perspektivische Teilansicht einer Abdeckstruktur gemäß der bevorzugten Ausführungsform; und
Fig. 6 eine perspektivische Teilansicht eines Oberwerkzeugs des Vorformwerkzeugs gemäß der bevorzugten Ausführungsform.

Die Figuren sind lediglich schematischer Natur und dienen ausschließlich dem Verständnis der Erfindung. Die gleichen Elemente sind mit denselben Bezugszeichen versehen.

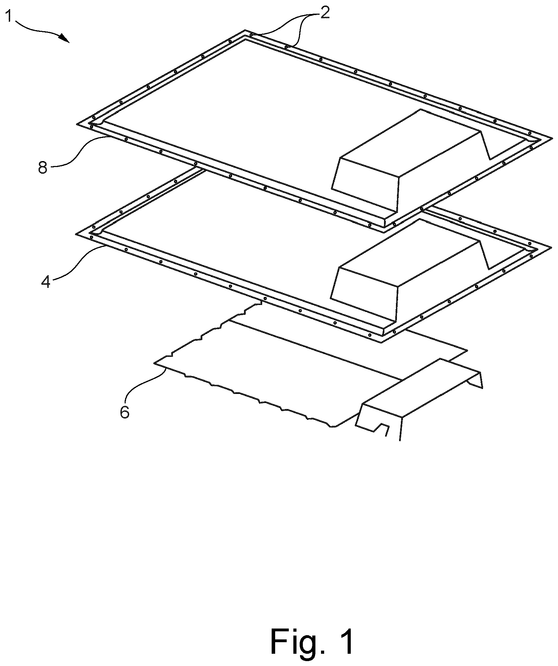

Fig. 1 zeigt den prinzipiellen Aufbau einer erfindungsgemäßen Abdeckstruktur 1 gemäß einer bevorzugten Ausführungsform. Die Abdeckstruktur 1 dient bei der bevorzugten Ausführungsform als ein Deckel für eine Batterie eines Elektrofahrzeugs und wird dafür mit einem Batteriekasten / Batteriegehäuse verschraubt. Hierfür weist die Abdeckstruktur 1, wie in Fig. 1 gezeigt, gleichmäßig über ihren Umfang verteilte Durchgangsöffnungen 2 auf, durch welche bei der Montage der Abdeckstruktur 1 an dem Batteriekasten entsprechende Schrauben (Befestigungsmittel) gesteckt und mit dem Batteriekasten verschraubt werden.

Die Abdeckstruktur 2 gemäß der bevorzugten Ausführungsform ist als mehrlagiges Verbundbauteil aufgebaut. Die Abdeckstruktur 1 weist dabei einen SMC-Grundkörper 4 auf, welcher auf einer Seite mit einer Brandschutzschicht 6 und auf der anderen Seite mit einer EMV-Schicht 8 verbunden, insbesondere verklebt, ist. In der bevorzugten Ausführungsform deckt die EMV-Schicht 8 den SMC-Grundkörper 4 nahezu vollständig ab, so dass sich die Durchgangsöffnungen 2 sowohl durch den SMC-Grundkörper 4 als auch durch die EMV-Schicht 8 erstrecken.

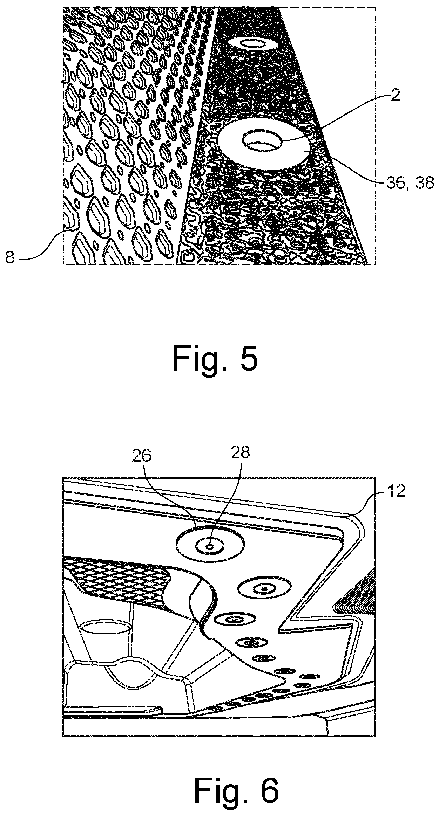

Die EMV-Schicht 8 ist dabei in der bevorzugten Ausführungsform aus einer pulverbeschichteten oder eben nicht pulverbeschichteten Aluminiumfolie/-kaschierung gebildet, die vor dem Verkleben in einem Vorformwerkzeug 10 entsprechend der Geometrie des SMC-Grundkörpers 4 geformt wird. Die EMV-Schicht 8 hat dabei eine kalottierte Oberfläche, d.h. die dem SMC-Grundkörper 4 nach dem Verkleben abgewandte Fläche der EMV-Schicht 8 hat, wie vor allem in Fig. 5 zu sehen, eine dreidimensionale Struktur (Beulstruktur) mit einer Vielzahl gleichartiger, regulär angeordneter und im Querschnitt angenähert halbkreis- bzw. kreisabschnittsförmiger Strukturelemente.

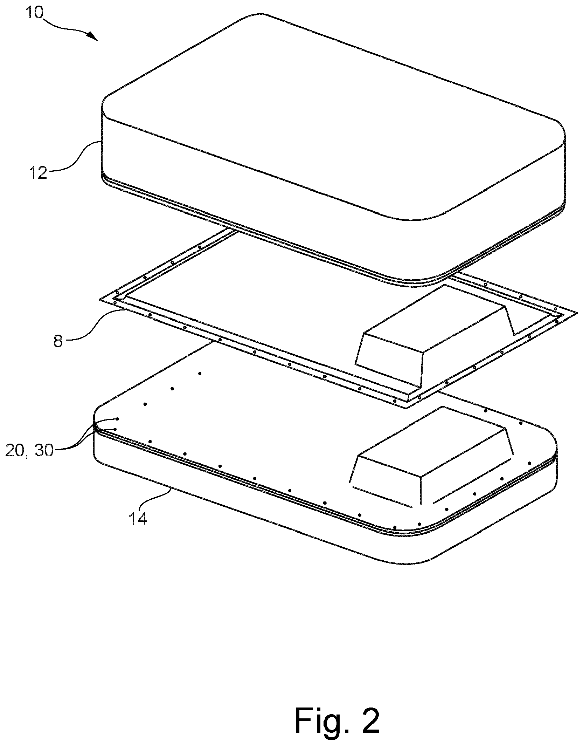

Der prinzipielle Aufbau des Vorformwerkzeugs 10 ist dabei in Fig. 2 gezeigt. Das Vorformwerkzeug 10 weist dabei ein Oberwerkzeug 12 und ein Unterwerkzeug 14 auf, welche zwischen einer Umformposition und einer Auflegposition in einer Höhenrichtung relativ zueinander zu- bzw. auseinandergefahren werden können. In Fig. 2 sind die beiden Werkzeughälften in der Auflegposition, d.h. das Oberwerkzeug 12 und das Unterwerkzeug 14 sind auseinandergefahren. Zwischen dem Oberwerkzeug 12 und dem Unterwerkzeug 14 ist die EMV-Schicht 8 abgebildet.

Wie vorstehend erwähnt, wird die unverformte EMV-Schicht 8, bzw. ein EMV-Rohling, in dem Vorformwerkzeug 10 entsprechend der Geometrie des SMC-Grundkörpers 4 verformt. Hierfür wird zunächst die unverformte EMV-Schicht 8 auf das Unterwerkzeug 14 aufgelegt. Im Anschluss daran fährt das Oberwerkzeug 12 in Höhenrichtung auf das Unterwerkzeug 14 zu, d.h. in die Umformposition, wobei sich dabei die unverformte EMV-Schicht 8 an die Oberflächenkontur des Unterwerkzeugs 14 und des Oberwerkzeugs 12 anlegt/anpasst.

Um die Positionierung der EMV-Schicht 8 relativ zu dem SMC-Grundkörper 4 zu erleichtern, ist zudem eine Selbstzentrierung vorgesehen, die bei der dargestellten Ausführungsform von einer Einwölbung der EMV-Schicht 8 und einer dazu passenden Auswölbung des SMC-Grundkörpers 4 gebildet ist. Wenn die EMV-Schicht 8 auf den SMC-Grundkörper 4 abgesenkt wird, taucht die Auswölbung in die Einwölbung formschlüssig ein, wodurch sich eine Vorpositionierung der beiden Teile zueinander ergibt.

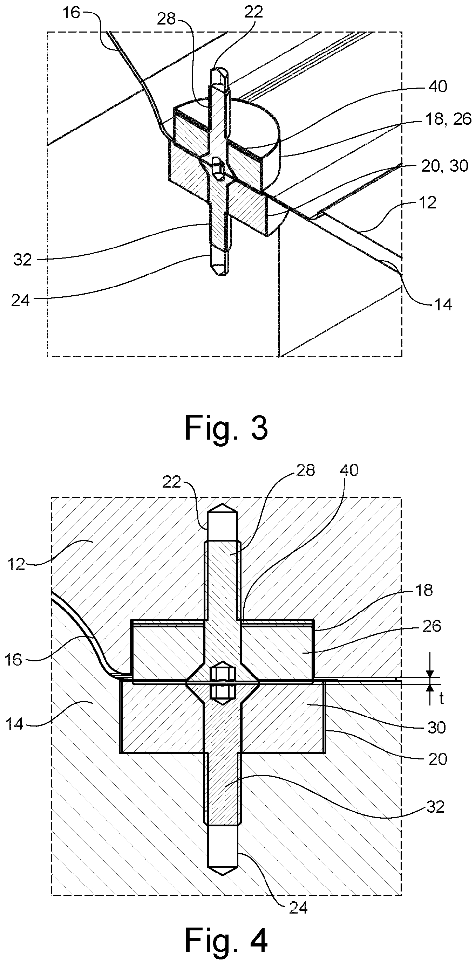

Wie nachstehend näher erläutert und beispielsweise in Fig. 3 zu sehen, ist in der Umformposition zwischen dem Oberwerkzeug 12 und dem Unterwerkzeug 14 ein Formspalt 16 zur Aufnahme der EMV-Schicht 8 ausgebildet. Somit kann sichergestellt werden, dass die Kalottenstruktur der kalottierten Oberfläche auch nach dem Umformen erhalten bleibt. Eigentlich wird jedoch die kalottierte Oberfläche eingesetzt, um Risse in der Folie beim Umformen zu vermeiden.

Des Weiteren weist das Vorformwerkzeug 10, d.h. das Oberwerkzeig 12 und das Unterwerkzeug 14, über den Umfang verteilte, lokale Prägestellen auf. Die lokalen Prägestellen sind dabei, wie in Fig. 2 angedeutet, jeweils im Bereich der Durchgangsöffnungen 2 angeordnet.

An jeder Prägestelle ist, wie insbesondere in Fig. 6 zu sehen, in dem Oberwerkzeug 12 eine Druckstückaufnahme 18 und in dem Unterwerkzeug 14 eine Gegenstückaufnahme 20 ausgeformt. Die Druckstückaufnahme 18 und die Gegenstückaufnahme 20 sind dabei in der bevorzugten Ausführungsform jeweils als kreisrundes Sackloch mit einer konzentrischen Gewindebohrung 22, 24 ausgebildet.

In der Druckstückaufnahme 18 ist ein gehärtetes Druckstück 26 aufgenommen. Das gehärtete Druckstück 26 hat folglich eine größere Härte als das umgebende Material, insbesondere die Druckstückaufnahme 18. Das gehärtete Druckstück 26 ist ferner in der Form einer kreisrunden Scheibe mit einem konzentrischen / mittigen Durchgangsloch ausgeführt. Um das Druckstück 26 an dem Oberwerkzeug 12 bzw. in der Druckstückaufnahme 18 zu befestigen, ist eine Schraube 28 durch das Durchgangsloch des Druckstücks 26 geführt und mit einem Innengewinde der Gewindebohrung 22 des Oberwerkzeugs 12 in Eingriff.

Wie in Fig. 4 zu erkennen, ist in der Gegenstückaufnahme 20 ein gehärtetes Gegenstück 30 aufgenommen. Das gehärtete Gegenstück 30 hat folglich eine größere Härte als das umgebende Material, insbesondere die Gegenstückaufnahme 20. Das gehärtete Gegenstück 30 ist ferner in der bevorzugten Ausführungsform, ähnlich zu dem Druckstück 26, in der Form einer kreisrunden Scheibe mit einem konzentrischen Durchgangsloch ausgeführt. Durch das Durchgangsloch des Gegenstücks 30 ist eine Schraube 32 geführt und mit einem Innengewinde der Gewindebohrung 24 des Unterwerkzeugs 14 in Eingriff. So kann das Gegenstück 30 an dem Unterwerkzeug 14 bzw. in der Gegenstückaufnahme 20 befestigt werden.

In der bevorzugten Ausführungsform sind das Druckstück 26 und das Gegenstück 30 als kreisrunde Scheiben ausgeführt. Wie in Fig. 4 gezeigt, ist dabei ein Außendurchmesser des Druckstücks 26 kleiner als ein Außendurchmesser des Gegenstücks 30. D.h. eine dem Druckstück 26 zugewandte Stirnfläche des Gegenstücks 30 ist größer als eine dem Gegenstück 30 zugewandte Stirnfläche des Druckstücks 26. Durch den größeren Außendurchmesser bzw. die größere Stirnfläche kann das Gegenstück 30 beim Verprägen den Prägedruck bzw. die Prägekraft besser aufgenommen werden.

Fign. 3 und 4 zeigen das Vorformwerkzeug 10 in der Umformposition. D.h. zwischen dem Oberwerkzeug 12 und dem Unterwerkzeug 14 ist die EMV-Schicht 8 eingelegt. Wie vor allem in Fig. 4 zu erkennen, ist hierbei zwischen dem Oberwerkzeug 12 und dem Unterwerkzeug 14 der Formspalt 16 zur Aufnahme der EMV-Schicht 8 ausgebildet. Das Druckstück 26 ragt hierfür über die dem Unterwerkzeug 6 zugewandte Fläche des Oberwerkzeugs 12 um eine Verprägetiefe t vor. Demnach übt das Oberwerkzeug 12 an den Prägestellen, d.h. im Bereich der Durchgangsöffnungen 2, eine Prägekraft auf die EMV-Schicht 8 aus. Die EMV-Schicht 8 wird also an den Prägestellen lokal stärker verformt/verprägt. Anders ausgedrückt drücken die Druckstücke 26 die EMV-Schicht 8 an den Prägestellen gegen die Gegenstücke 30, so dass sich in diesem Bereich, wie in Fig. 5 gezeigt, ein Auflageabschnitt 36 mit einer im Wesentlichen glatten Prägeoberfläche 38 ausbildet. In noch anderen Worten ausgedrückt ist das Vorformwerkzeug 10 so ausgeführt, dass es beim Zufahren in die Umformposition die EMV-Schicht 8 an die 3D-Geometrie des SMC-Grundkörpers 4 anpasst und zwischen den Druckstücken 26 und den entsprechenden Gegenstücken 30 eine Prägekraft auf die EMV-Schicht 8 ausübt, im Wesentlichen ohne dabei die kalottierte Oberfläche der EMV-Schicht 8 zu verformen. Durch das lokale Verprägen der EMV-Schicht 8 mit Hilfe der Druckstücke 26 und Gegenstücke 30 können demnach die Auflageabschnitte 36 ausgeformt werden.

Wenn als EMV-Schicht 8 wie in der bevorzugten Ausführungsform eine pulverbeschichtete Aluminiumfolie verwendet wird, kann es beim Vorformen/Umformen der EMV-Schicht 8 aufgrund der geringen Dicke der Aluminiumfolie von ca. 0,2 mm zu einer Ausbildung von Falten kommen. Im Bereich einer solchen Falte liegen demnach mehrere Lagen der Aluminiumfolie übereinander, d.h. im Bereich der Falte hat die Aluminiumfolie eine größere Dicke bzw. die EMV-Schicht 8 eine größere Wandstärke. Wenn nun eine solche Falte an einer Prägestelle vorliegt, kann es vorkommen, dass die aufgebrachte Prägekraft aufgrund der erhöhten Wandstärke nicht ausreicht, den Auflageabschnitt 36 mitsamt der glatten Prägeoberfläche 38 auszubilden.

Daher kann die Verprägetiefe t des Druckstücks 26, wie in Fig. 4 gezeigt, in der bevorzugten Ausführungsform mittels zwischen dem Druckstück 26 und dem Oberwerkzeug 4 positionierbare Unterlegbleche 40 angepasst werden. D.h. mittels der Unterlegbleche 40 kann die Verprägetiefe t für jedes Druckstück 26 individuell eingestellt werden, um so an allen Prägestellen die Ausbildung des Auflageabschnitts 36 mitsamt der glatten Prägeoberfläche 38 zu gewährleisten.

Die an die 3D-Geomterie des SMC-Grundkörpers 4 angepasste EMV-Schicht 8 mit den Auflageabschnitten 36 wird nach dem Vorformen und Verprägen aus dem Vorformwerkzeug 10 entnommen und, wie vorstehend beschrieben, in einer Klebepresse mit dem SMC-Grundkörper 4 verklebt, um die Abdeckstruktur 1 herzustellen. Die Durchgangsöffnungen / Durchgangsbohrungen 2 werden später (nach dem Klebeprozess) eingebracht / gefräst.

Wenn nun die Abdeckstruktur 1 mit dem Batteriegehäuse verschraubt wird, liegen die Schraubenköpfe der Schrauben flächig auf den Prägeoberflächen 38 der Auflageabschnitte 36 auf und verhindern somit effektiv den Fluideintritt in das Batteriegehäuse und reduzieren die Korrosionsgefahr.

### Bezugszeichenliste

- 1: Abdeckstruktur
- 2: Durchgangsöffnung
- 4: SMC-Grundkörper
- 6: Brandschutzschicht
- 8: EMV-Schicht
- 10: Vorformwerkzeug / Prägewerkzeug
- 12: Oberwerkzeug
- 14: Unterwerkzeug
- 16: Formspalt
- 18: Druckstückaufnahme
- 20: Gegenstückaufnahme
- 22: Gewindebohrung
- 24: Gewindebohrung
- 26: Druckstück
- 28: Schraube
- 30: Gegenstück
- 32: Schraube
- 34: Formspalt
- 36: Auflageabschnitt
- 38: Prägeoberfläche
- 40: Unterlegblech
- t: Verprägetiefe

## Patentansprüche

1. Abdeckstruktur (1), insbesondere für ein Batteriegehäuse eines elektrischen Fahrzeugs, mit einem SMC-Grundkörper (4) und einer mit dem SMC-Grundkörper (4) verklebten EMV-Schicht (8), welche eine kalottenförmige Oberfläche und eine Mehrzahl an über den Umfang der Abdeckstruktur (1) verteilten Durchgangsöffnungen (2) zur Aufnahme von Befestigungsmitteln aufweist, insbesondere um die Abdeckstruktur (1) an dem Batteriegehäuse zu befestigen, **dadurch gekennzeichnet, dass** um wenigstens eine der Durchgangsöffnungen (2) ein Auflageabschnitt (36) vorhanden ist, der mit einer glatten Prägeoberfläche (38) versehen ist.

2. Abdeckstruktur (1) nach Anspruch 1, **dadurch gekennzeichnet, dass** die EMV-Schicht (8) eine Aluminiumfolie ist oder diese umfasst.

3. Verfahren zum Herstellen einer EMV-Schicht (8) für eine Abdeckstruktur (1) eines Batteriegehäuses, vorzugsweise nach Anspruch 1 oder 2, mit einem Vorformwerkzeug (10), wobei die EMV-Schicht (8), insbesondere in Form einer Aluminiumfolie, mit einer kalottierten Oberfläche formverändert wird und Bereiche um Durchgangsöffnungen (2) der EMV-Schicht (8) zur Ausbildung von Auflageabschnitten (36) mit einer Prägeoberfläche (38) prägend bearbeitet werden.

4. Verfahren nach Anspruch 3, **dadurch gekennzeichnet, dass** die EMV-Schicht (8) in einem einzigen Bearbeitungsschritt, insbesondere mit dem Vorformwerkzeug (10), formverändert wird und die Bereiche prägend unter Plättung der kalottierten Oberfläche bearbeitet werden.

5. Vorformwerkzeug (10) zum Ausformen einer EMV-Schicht (8) für eine Abdeckstruktur (1) nach Anspruch 1 oder 2, insbesondere zum Durchführen des Verfahrens nach Anspruch 3 oder 4, mit einem Unterwerkzeug (14) und einem relativ zu dem Unterwerkzeug (14) in einer Höhenrichtung zwischen einer Umformposition und einer Auflegposition verfahrbaren Oberwerkzeug (12), wobei in der Umformposition zwischen dem Unterwerkzeug (14) und dem Oberwerkzeug (12) ein Formspalt (16) zur Aufnahme der EMV-Schicht (8) ausgebildet ist, **dadurch gekennzeichnet, dass** das Oberwerkzeug (12) zumindest eine Druckstückaufnahme (18) zur Aufnahme eines gehärteten Druckstückes (26) und das Unterwerkzeug (14) wenigstens eine Gegenstückaufnahme (20) zur Aufnahme eines gehärteten Gegenstücks (30) aufweist.

6. Vorformwerkzeug (10) nach Anspruch 5, **dadurch gekennzeichnet, dass** das zumindest eine Druckstück (26) in der Umformposition die EMV-Schicht (8) gegen das zumindest eine Gegenstück (30) drückt und an einer Prägestelle zwischen dem zumindest einen Druckstück (26) und dem zumindest einen Gegenstück (30) lokal stärker verprägt.

7. Vorformwerkzeug (10) nach einem Anspruch 5 oder 6, **dadurch gekennzeichnet, dass** das zumindest eine Druckstück (26) um eine einstellbare Verprägetiefe (t) über eine dem Unterwerkzeug (14) zugewandte Oberfläche des Oberwerkzeugs (12) und/oder das zumindest eine Gegenstück (30) um die einstellbare Verprägetiefe (t) über eine dem Oberwerkzeug (12) zugewandte Oberfläche des Unterwerkzeugs (14) vorragen.

8. Vorformwerkzeug (10) nach Anspruch 7, **dadurch gekennzeichnet, dass** die Verprägetiefe (t) durch zwischen dem zumindest einen Druckstück (26) und dem Oberwerkzeug (12), insbesondere der zumindest einen Druckstückaufnahme (18), und/oder zwischen dem zumindest einen Gegenstück (30) und dem Unterwerkzeug (14), insbesondere der zumindest einen Gegenstückaufnahme (20), einlegbare Unterlegbleche (40) einstellbar ist.

9. Vorformwerkzeug (10) nach einem der Ansprüche 5 bis 8, **dadurch gekennzeichnet, dass** das zumindest eine Druckstück (26) und das zumindest eine Gegenstück (30) in der Höhenrichtung jeweils einen konstanten Querschnitt aufweisen, wobei vorzugsweise eine Querschnittsfläche des zumindest einen Druckstücks (26) in der Höhenrichtung kleiner ist als eine Querschnittsfläche des zumindest einen Gegenstücks (30) in der Höhenrichtung.

## Claims

1. A covering structure (1), in particular for a battery housing of an electric vehicle, having an SMC base body (4) and an EMC layer (8) which is bonded to the SMC base body (4) and has a dome-shaped surface and a plurality of passage openings (2) distributed over the circumference of the covering structure (1) for receiving fastening means, in particular for fastening the covering structure (1) to the battery housing, **characterized in that** a support portion (36) is provided around at least one of the passage openings (2), which is provided with a smooth embossing surface (38).

2. The covering structure (1) according to claim 1, **characterized in that** the EMC layer (8) is or comprises an aluminum foil.

3. A method for producing an EMC layer (8) for a covering structure (1) of a battery housing, preferably according to claim 1 or 2, with a pre-forming tool (10), wherein the EMC layer (8), in particular in the form of an aluminum foil, is changed in shape with a domed surface and regions around passage openings (2) of the EMC layer (8) are embossed with an embossing surface (38) to form support portions (36).

4. The method according to claim 3, **characterized in that** the EMC layer (8) is shaped in a single processing step, in particular with the pre-forming tool (10), and the areas are embossed while flattening the domed surface.

5. A pre-forming tool (10) for forming an EMC layer (8) for a covering structure (1) according to claim 1 or 2, in particular for carrying out the method according to claim 3 or 4, having a lower die (14) and an upper die (12) which can be moved relative to the lower die (14) in a height direction between a forming position and a lay-on position, wherein, in the forming position, a molding gap (16) for receiving the EMC layer (8) is formed between the lower die (14) and the upper die (12), **characterized in that** the upper die (12) has at least one pressure piece receptacle (18) for receiving a hardened pressure piece (26) and the lower die (14) has at least one counter piece receptacle (20) for receiving a hardened counter piece (30).

6. The pre-forming tool (10) according to claim 5, **characterized in that** the at least one pressure piece (26) presses the EMC layer (8) against the at least one counter piece (30) in the forming position and embosses it locally more strongly at an embossing point between the at least one pressure piece (26) and the at least one counter piece (30).

7. The pre-forming tool (10) according to claim 5 or 6, **characterized in that** the at least one pressure piece (26) projects by an adjustable embossing depth (t) beyond a surface of the upper die (12) facing the lower die (14) and/or the at least one counter piece (30) projects by the adjustable embossing depth (t) beyond a surface of the lower die (14) facing the upper die (12).

8. The pre-forming tool (10) according to claim 7, **characterized in that** the embossing depth (t) can be adjusted via shims (40) which can be inserted between the at least one pressure piece (26) and the upper die (12), in particular the at least one pressure piece receptacle (18), and/or between the at least one counter piece (30) and the lower die (14), in particular the at least one counter piece receptacle (20).

9. The pre-forming tool (10) according to one of claims 5 to 8, **characterized in that** the at least one pressure piece (26) and the at least one counter piece (30) each have a constant cross-section in the height direction, wherein a cross-sectional area of the at least one pressure piece (26) in the height direction preferably is smaller than a cross-sectional area of the at least one counter piece (30) in the height direction.

## Revendications

1. Structure de recouvrement (1), en particulier pour un boîtier de batterie d'un véhicule électrique, avec un corps de base SMC (4) et une couche CEM (8) collée au corps de base SMC (4), couche qui présente une surface en forme de calotte et une pluralité d'ouvertures de passage (2) réparties sur la périphérie de la structure de recouvrement (1) pour recevoir des moyens de fixation, en particulier pour fixer la structure de recouvrement (1) au niveau du boîtier de batterie, **caractérisée en ce qu'**une section d'appui (36), qui est pourvue d'une surface d'estampage lisse (38), est présente autour d'au moins une des ouvertures de passage (2).

2. Structure de recouvrement (1) selon la revendication 1, **caractérisée en ce que** la couche CEM (8) est une feuille d'aluminium ou comprend celle-ci.

3. Procédé de fabrication d'une couche CEM (8) pour une structure de recouvrement (1) d'un boîtier de batterie, de préférence selon la revendication 1 ou 2, avec un outil de préformage (10), dans lequel la couche CEM (8), en particulier sous la forme d'une feuille d'aluminium, est déformée avec une surface calottée et des zones autour des ouvertures de passage (2) de la couche CEM (8) sont usinées par estampage pour former des sections d'appui (36) avec une surface d'estampage (38).

4. Procédé selon la revendication 3, **caractérisé en ce que** la couche CEM (8) est déformée en une seule étape d'usinage, en particulier avec l'outil de préformage (10), et les zones sont usinées par estampage par aplatissement de la surface calottée.

5. Outil de préformage (10) pour former une couche CEM (8) pour une structure de recouvrement (1) selon la revendication 1 ou 2, en particulier pour mettre en oeuvre le procédé selon la revendication 3 ou 4, avec un outil inférieur (14) et un outil supérieur (12) déplaçable par rapport à l'outil inférieur (14) dans une direction de hauteur entre une position de déformation et une position de pose, dans lequel une fente de formage (16) est formée dans la position de déformation entre l'outil inférieur (14) et l'outil supérieur (12) pour recevoir la couche CEM (8), **caractérisé en ce que** l'outil supérieur (12) présente au moins un logement de pièce de pression (18) pour loger une pièce de pression durcie (26) et l'outil inférieur (14) présente au moins un logement de contre-pièce (20) pour recevoir une contre-pièce durcie (30).

6. Outil de préformage (10) selon la revendication 5, **caractérisé en ce que** l'au moins une pièce de pression (26) presse la couche CEM (8) contre l'au moins une contre-pièce (30) dans la position de déformation et l'estampe localement plus fortement au niveau d'endroit d'estampage entre l'au moins une pièce de pression (26) et l'au moins une contre-pièce (30).

7. Outil de préformage (10) selon la revendication 5 ou 6, **caractérisé en ce que** l'au moins une pièce de pression (26) fait saillie selon une profondeur d'estampage réglable (t) sur une surface de l'outil supérieur (12) tournée vers l'outil inférieur (14) et/ou l'au moins une contre-pièce (30) fait saillie selon la profondeur d'estampage réglable (t) sur une surface de l'outil inférieur (14) tournée vers l'outil supérieur (12).

8. Outil de préformage (10) selon la revendication 7, **caractérisé en ce que** la profondeur d'estampage (t) peut être réglée par des cales (40) pouvant être insérées entre l'au moins une pièce de pression (26) et l'outil supérieur (12), en particulier l'au moins un logement de pièce de pression (18), et/ou entre l'au moins une contre-pièce (30) et l'outil inférieur (14), en particulier l'au moins un logement de contre-pièce (20).

9. Outil de préformage (10) selon l'une quelconque des revendications 5 à 8, **caractérisé en ce que** ladite au moins une pièce de pression (26) et ladite au moins une contre-pièce (30) présentent respectivement une section constante dans la direction de hauteur, dans lequel de préférence une surface de section de l'au moins une pièce de pression (26) dans la direction de hauteur est inférieure à une surface de section de l'au moins une contre-pièce (30) dans la direction de hauteur.
